# EUROPEAN PATENT APPLICATION

(11) **EP 4 786 935 A1**
(43) Date of publication of application: **05.08.2026**
(21) Application number: 25155442.4
(22) Date of filing: 31.01.2025
(51) Int. Cl.: G01K 7/26, G01K 15/00

(54) **METHOD OF ESTIMATING AN INTERNAL TEMPERATURE OF A LITHIUM-ION CELL**

(71) Applicant: CSEM Centre Suisse d'Electronique et de Microtechnique SA - Recherche et Développement, 2002 Neuchâtel (CH)
(72) Inventor: BHOIR, Shubham, 2056 Dombresson (CH); BRIVIO, Claudio, 8057 Zürich (CH)
(74) Representative: Patentsmith SA

(57) **Abstract**

Method of estimating an internal temperature of a lithium-ion cell (1), comprising steps of:
a) carrying out an electrochemical impedance spectroscopy measurement on said cell (1) at a known internal temperature so as to determine a phase of impedance at a plurality of electrochemical impedance spectroscopy frequencies;
b) carrying out a distribution of relaxation times analysis on said electrochemical impedance spectroscopy measurement;
c) determining a characteristic frequency corresponding to an electrochemical impedance spectroscopy frequency associated with movement of lithium ions through a solid electrolyte interface layer of said cell, on the basis of said distribution of relaxation times analysis;
d) providing a correlation curve representative of the relationship between the impedance phase at said characteristic frequency and internal temperature for said cell (1), and carrying out a calibration of said correlation curve on the basis of said impedance phase as measured in step a) at said characteristic frequency and said known internal temperature;
e) repeatedly, carrying out electrochemical impedance spectroscopy at said characteristic frequency to determine an impedance phase at said characteristic frequency;
f) on the basis of said impedance phase at said characteristic frequency as determined out in step e), estimating said internal temperature based on said correlation curve as calibrated in step d);
g) repeatedly, updating said characteristic frequency and updating said calibration by repeating steps a)-d).

## Description

### Technical Field

The present invention relates to the field of rechargeable lithium-ion cells. More specifically, it relates to a method of estimating an internal temperature of such a cell, as well as to a controller adapted to carry out such a method.

### State of the Art

With the increasing use of lithium-ion rechargeable cells in large-scale everyday applications, such as in electric vehicles, power banks for buildings etc., issues relating to the fire risk presented by such cells have become more prevalent. This fire risk occurs when such cells break down and overheat due to a runaway exothermic reaction, due to deficient monitoring of their internal temperature leading to them not being removed from service before this occurs.

Surface-mounted temperature sensors mounted on the cells tend to give a lower reading than the internal temperature of the cell, and their response lags behind the actual internal temperature changes, leading to rapid increases in temperature not being guaranteed to be detected fast enough to always prevent a thermal runaway.

Integrating a temperature sensor in the interior of each cell adds bulk, adds weight and adds extra electrical connections which need to be interconnected with a controller. It is therefore costly, and in order to avoid this, various methods of determining the temperature via other means have been developed.

For instance, WO2012/054473 discloses a method of using electrochemical impedance spectroscopy to determine a phase shift of a particular characteristic frequency associated with the movement of lithium ions through a solid electrolyte interface layer of said cell, which is correlated with temperature. However, this document does not disclose how to determine the characteristic frequency, which is presumed to be predetermined or assumed rather than directly measured for the cell in question.

Li-Ion Cells Internal Temperature Estimation Using Medium-Frequency Measurements of Impedance Argument, S. S. Bhoir et al, September 2024 Journal of Energy Storage 97(4):112754, DOI:10.2139/ssrn.4726914 discloses the basic methodology upon which the present invention builds. In this paper, herein incorporated by reference in its entirety, lithium-ion cells were analysed under controlled conditions by Electrochemical Impedance Spectroscopy (EIS) and Distribution of Relaxation Times (DRT) techniques in order to infer the characteristic frequency at which the phase of the impedance measurement correlates with the internal temperature of the cell. By subsequent EIS measurements at this characteristic frequency when the cell is in use, the internal temperature can be estimated. However, the method of this paper presents a serious limitation, in that it does not consider the question as to whether the methodology holds for aged cells, and hence any application of the method in practice will naturally assume that this characteristic frequency and the phase are invariant over the lifetime of the cell.

Although this paper demonstrates a robustness of the results obtained in respect of a number of factors, namely at different states of charge (SoC) and from one cell to another, nominally identical cell, more recent experience has shown, however, that aging of the cell can affect the estimated temperature readings sufficiently to still incur a fire risk.

The aim of the invention is hence to at least partially overcome the above-mentioned limitations of the prior art.

### Disclosure of the invention

More precisely, the invention relates to a method of estimating an internal temperature of a lithium-ion cell. This method comprises steps of:
a) carrying out an electrochemical impedance spectroscopy (EIS) measurement on said cell at a known internal temperature, this internal temperature being known e.g. by a temperature sensor internal or external to said cell, said cell having equilibrated to a known ambient temperature, or similar. Said EIS is typically carried out in a frequency range of 10 kHz to 100 Hz, in either charging, discharging or stable conditions, and determines the phase of the impedance of the cell at a plurality of frequencies, as is generally known; subsequently
b) carrying out a distribution of relaxation times (DRT) analysis on said electrochemical impedance spectroscopy measurement as obtained in step a); subsequently
c) determining a characteristic frequency corresponding to the electrochemical impedance spectroscopy frequency associated with movement of lithium ions through a solid electrolyte interface layer of said cell, on the basis of said distribution of relaxation times analysis carried out in step b). This characteristic frequency corresponds to the frequency of the second peak of a resistance rate vs time constant plot obtained in step b); subsequently
d) providing a correlation curve representative of the relationship, for said cell, between, on the one hand, the impedance phase (as measured by EIS in step a)) at said characteristic frequency, and on the other hand, internal temperature, on the basis of the phase measured in step a) at said characteristic frequency as determined in step c) and said known internal temperature, and carrying out a calibration of said correlation curve, i.e. shifting said correlation curve such that the curve intersects a value corresponding to the phase of the impedance as measured by EIS at the known internal temperature. This correlation curve is typically predetermined for the particular type of cell in question, preferably in an empirical manner; subsequently
e) repeatedly, carrying out electrochemical impedance spectroscopy at said characteristic frequency to determine an impedance phase at this characteristic frequency; subsequently
f) on the basis of said impedance phase at said characteristic frequency determined out in step e), determining said impedance phase and then estimating said internal temperature based on said calibrated correlation curve; subsequently
g) repeatedly, updating said characteristic frequency and said calibration of said correlation curve by repeating steps a)-d).

The characteristic frequency is hence repeatedly updated by repeating steps a)-d), possibly in a periodical manner, and thus it follows the chemical changes due to aging of the cell. As a result, the accuracy of the temperature estimates over time is higher than with prior art methods, since the correlation between phase and internal temperature is constantly recalibrated in step d) every time the method re-performs steps a)-d). This increases safety since it reduces the chance of step f) giving a temperature value which is too low, and hence the chance of the cell overheating and catching fire is reduced.

Advantageously, said updating said characteristic frequency, i.e. the repetition of steps a)-d), is carried out with the battery in service in a system, where it is arranged to power a device.

Advantageously, said updating said characteristic frequency, i.e. the repetition of steps a)-d), is carried out after a determination of a stable temperature, said stable temperature representing a variation in temperature of preferably 0.5°C or less during a period of preferably 15 minutes or more, more preferably of 1 hour or more. Said stable temperature may be determined by one or both of the estimate of said internal temperature obtained in step f) or from a temperature sensor integrated in said system, preferably in proximity to said cell. This ensures that the temperature sensor is measuring a temperature which corresponds to, or correlates with, the actual internal temperature of the cell 1, in order to maximise the accuracy of determination of the updated characteristic frequency.

Typically, steps e) and f) may be repeated at a constant or variable repeat rate of between 0.5 seconds and 1 hour, preferably between 0.5 seconds and 10 minutes, more preferably between 0.5 seconds and 10 seconds. For instance, the repeat rate may be shorter if there appears to be an increased safety risk, e.g. if the estimated internal temperature is relatively high.

Typically, said updating said characteristic frequency (i.e. the repetition of steps a)-d)) is carried out at intervals of between 1 week and 3 months, preferably between 2 weeks and 6 weeks. In addition, or alternatively, said updating said characteristic frequency may be carried out in reaction to a predetermined reduction in state of health of said cell, such as a 1% reduction or any other convenient threshold.

The invention also relates to a system comprising a battery and a controller arranged to control charging and/or discharging of said battery, wherein said controller is adapted to carry out at least some, preferably all, of the steps of the method as described above.

### Brief description of the drawings

Further details of the invention will become more apparent upon reading the detailed description, in reference to the appended figures, which illustrate:
- Figure 1: a generic schematic representation of a system upon which the method of the invention may be practiced;
- Figure 2: a generic flow diagram of the method of the invention;
- Figure 3: a representative Nyquist plot generated in step a of the method of the invention;
- Figure 4: a representative resistance rate versus time constant plot generated in step b of the method of the invention;

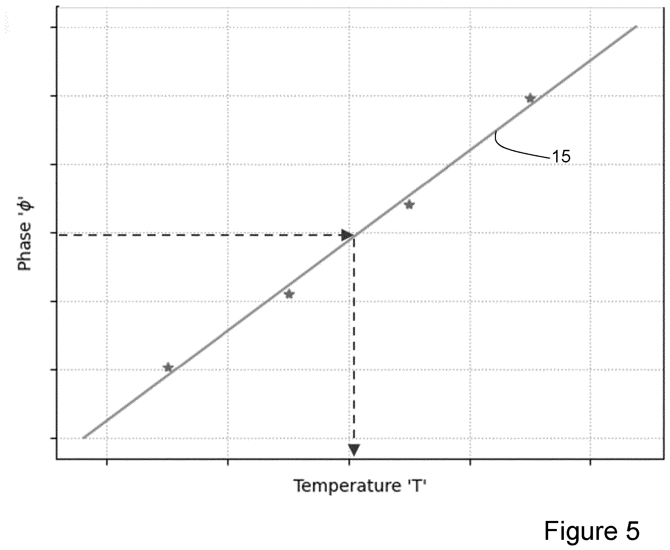

- Figure 5: a representative calibration plot of phase against temperature measured by performing EIS on a cell at the characteristic frequency f*.

### Embodiments of the invention

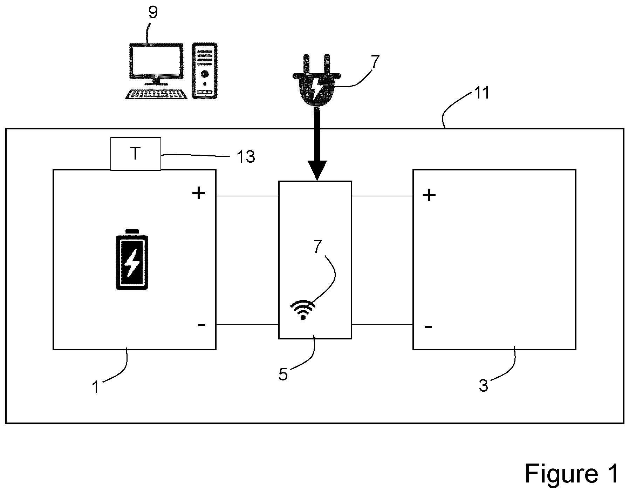

Figure 1 generically illustrates a system 11 comprised of at least one rechargeable lithium-ion cell 1, the term "cell" being considered as synonymous with "battery". Cell 1 is arranged to power a device 3 of any convenient type, which may be a portable device (Smartphone, laptop computer, tablet, etc.), an electric vehicle, a hybrid vehicle, home or industrial appliances via a suitable interface, or similar. Cell 1 is associated with a controller 5, which is adapted to control the charging and discharging of the cell 1, charging taking place from an external power source 7 (grid electricity, solar panels, etc.) and/or by recuperation from the device 3, such as regenerative braking in the case of an electric or hybrid vehicle. Controller 5 may control any number of cells 1, may carry out part or the entirety of the method according to the invention, and may comprise, or be in communication with, a communications interface 7 adapted to communicate with at least one programmable computer 9, cloud computing solution or similar, part of the method being able to be carried out remotely on said programmable computer, cloud computing solution or similar, if desired. A temperature sensor 13 is also provided within the system 11 at a convenient location, whether internal or external to the cell 1. When multiple cells 1 are present, temperature sensor 13 can, for instance, be packaged with the cells 1 in such a way that it measures a representative temperature.

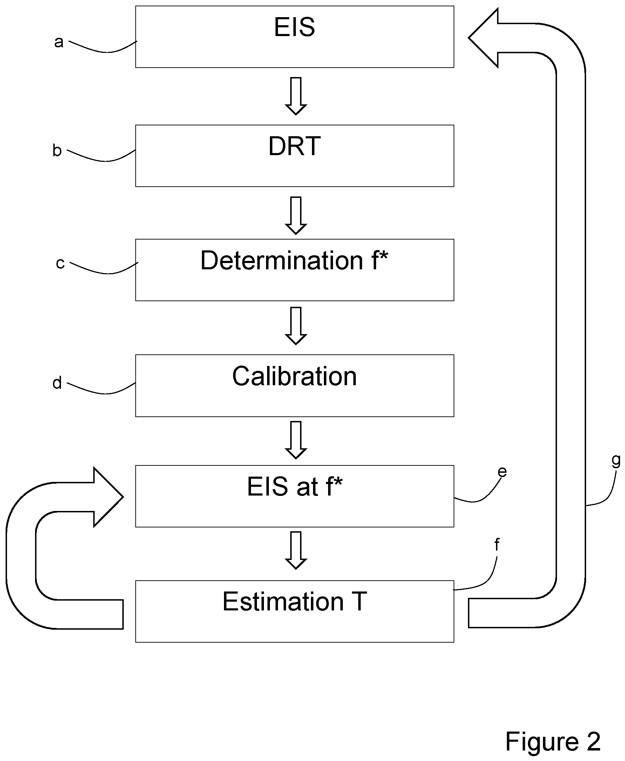

Figure 2 illustrates a flow diagram of the method of the invention.

In step a, Electrochemical Impedance Spectroscopy (EIS) is carried out on said cell 1 at a known temperature T, either under controlled conditions (e.g. in a laboratory, whether integrated into system 11 or not), or in-situ in the complete device, under the command of the controller 5. It should be noted that "in-situ" means that the cell 1 is already installed in a system 11 with its corresponding device 3 and controller 5, with the system 11 having been taken into use. Known temperature T may be determined e.g. by a temperature sensor 13 within or outside cell 1, or in this initial stage by allowing the cell 1 to equilibrate to a known temperature in a climate chamber.

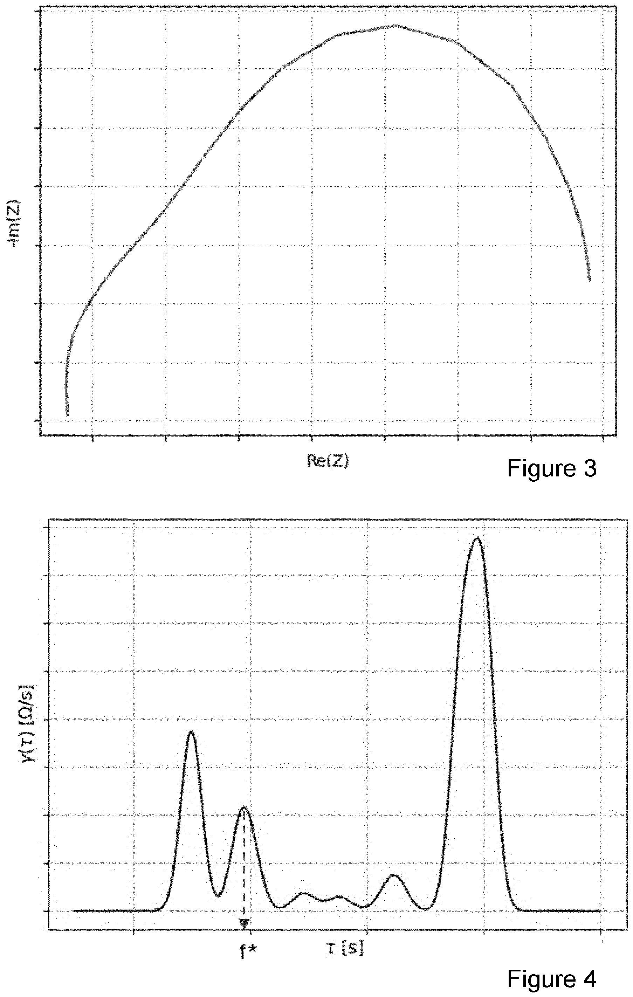

Typically, such EIS is carried out in a frequency range of 10 kHz to 100 Hz, and may be carried out under stable, discharging or charging conditions, by examining the voltage-current response to sine waves at various frequencies within this range, from which an impedance phase is determined at each EIS frequency considered. EIS as such is well-explored in the literature, and hence need not be described in detail here. This results in a Nyquist plot of the imaginary component of impedance (vertical axis) versus the real component of impedance (horizontal axis), obtained at various frequencies in the above-mentioned range. An example of such a Nyquist plot is presented in figure 3.

Subsequently, in step b, the data obtained by the EIS carried out in step a) is processed by Distribution of Relaxation Times (DRT) analysis, resulting in a plot such as that presented in figure 4, in which resistance rate of change γ (vertical axis, linear scale, units of Ohms/sec) is plotted against time constant *τ* (horizontal axis, logarithmic scale, units of seconds). DRT analysis may be carried out in the controller 5 or in the programmable computer 9.

Subsequently, in step c, the characteristic frequency f* of EIS at which the impedance phase is strongly dependent on cell temperature, but is essentially independent of state of charge, is determined. The second peak of the curve of the DRT graph corresponds to the movement of lithium ions through the solid-electrolyte interface (SEI) layer in the cell 1, and the inverse of the time constant *τ* corresponding to this peak represents said characteristic frequency f*. This determination may be carried out in the controller 5 or in the programmable computer 9, if present.

In step d, a correlation curve 15 representing the relationship between the impedance phase at the characteristic frequency f*, as previously measured by EIS in step a, and the known temperature T is calibrated. This correlation curve 15 is pre-determined and representative of the type of cell 1 concerned, and is typically a straight line, in most cases. The calibration causes the correlation curve 15 to be shifted by applying an offset such that the intersection of the known temperature T and the measured impedance phase *φ* at the characteristic frequency *f** lie on the calibration curve 15. For instance, the correlation curve 15 may simply be shifted horizontally and/or vertically in the case of a straight line. This step may also be carried out in the controller 5 or in the programmable computer 9, if present.

More generally, the correlation curve is a correlation curve representative of a given type of lithium-ion cells to which the cell 1 belongs to, and it may have a predetermined shape corresponding to the given type of lithium-ion cells (for instance a straight line) with a reference position varying from a cell to another, to be calibrated on a case-by-case basis for each cell belonging to the given type of lithium-ion cells.

In step e, when the cell 1 is in use, EIS is then carried out repeatedly, preferably in a periodical manner, under the command of the controller 5, at the characteristic frequency f* under stable, charging or discharging conditions, in order to measure an impedance phase *φ* at the characteristic frequency f*. Subsequently, the correlation curve 15, as calibrated in step d, is then used in step f to estimate the internal temperature T of the cell 1 on the basis of the measured impedance phase *φ* at the characteristic frequency *f** as determined in step e, e.g. by a mathematical formula representing the calibrated correlation curve 15, a look-up table corresponding thereto, or any other suitable methodology. More generally, the expression "correlation curve" as used in the present disclosure should be interpreted as encompassing any equivalent data relating to the correlation between the impedance phase *φ* and the internal temperature T of the cell of interest, for instance a mathematical formula suitable to plot a corresponding correlation curve, a look-up table corresponding thereto, or any other suitable methodology, the calibration step being then adapted to the nature of the available correlation data. The estimation of the internal temperature T again may be carried out by the controller 5 or in the programmable computer 9, if present. Steps e and f may be repeated with the cell 1 in-situ, and indeed the cell 1 may even be in service, with current either being discharged therefrom to power the device 3, or with current being fed into the cell 1 to charge it. In general, if the impedance phase *φ* can be measured with an accuracy of the order of 0.4°, the temperature T of the cell 1 can be estimated with an accuracy of the order of 1°C.

Typically, steps e and f are repeated at intervals preferably of the order of seconds, possibly of the order of minutes or of an hour. For instance, in the case of safety concerns, e.g. high temperature estimates, they may be repeated every second. Indeed, the repetition rate may be varied according to need (e.g. a lower rate when the device 3 is inactive, and a higher rate if said safety concerns are present). Furthermore, it is possible in step e to carry out EIS at one or more additional frequencies f of interest, in order to derive further metrics such as state of charge, state of health, or similar.

It should be noted that, ideally, all of the steps of the method are carried out by or under the command of the controller 5.

Further details regarding steps a-f are disclosed in Bhoir et al (2024), op cit, herein incorporated by reference in its entirety, and hence do not need to be detailed further.

The key insight for the present invention is the highly unexpected and surprising determination that the age-related inaccuracy that develops in the temperature estimates obtained in step f is related to a shift in the characteristic frequency *f** which occurs with age due to chemical changes in the cell 1, rather than being to do with another factor such as an increase in the internal resistance of the cell 1, or chemical changes in the cell 1 as the cell 1 ages that influence the imaginary part of the impedance, or a reduction in the state-of-health of the cell 1, or another confounding factor relating to the cell 1.

The key to the invention is step g, namely updating the characteristic frequency *f** by repeating steps a-d with said cell in-situ, i.e. in service in the system 11 and not under controlled conditions such as a laboratory environment. The repetition rate, possibly the frequency, of updating the characteristic frequency f* may be of the order of days, weeks, one or more months, and/or may be in response to another metric such as a decrease in the State of Health of the cell 1 by a predetermined amount (e.g. 1% or any other convenient threshold). This is best carried out when the device 3 is in service but not in immediate use by the user, such that the temperature of the cell 1 is constant and can be directly or indirectly measured by temperature sensor 13. In the case in which the temperature sensor 13 is not integrated within a cell 1, its reading may be corrected if necessary, based on a known difference between the internal temperature T and the temperature measured by the temperature sensor 13, this known difference having previously been ascertained empirically for the type of cell 1 and system 11 in question.

Indeed, the repetition of step g is best carried out when the temperature of the cell 1 has been stable (i.e. varied by less than 0.5°C or another predetermined value) for a certain predetermined time period, such as 15 minutes or more, preferably one hour or more (or other predetermined value), as estimated in step f and/or by temperature sensor 13. The exact moment at which the measurement is carried out for updating the characteristic frequency and the calibration, with respect to this predetermined time period, is not critical for the implementation of the method according to the present invention as long as the temperature is stable enough during the predetermined time period. For instance, the measurement may be carried out at the beginning, at the middle or at the end of the predetermined time period without major impact on the efficiency of the method of the present invention, and the one skilled in the art will encounter no particular difficulty to define a correct moment adapted to their specific needs and requirements.

The new characteristic frequency *f** is then used in steps e and f as before.

The characteristic frequency *f** is updated repeatedly and hence follows the chemical changes due to aging of the cell. As a result, the accuracy of the temperature estimates over time is higher than with prior art methods, since the correlation between impedance phase *φ* and temperature T is repeatedly recalibrated in step d every time the method re-performs steps a-d.

When the system 11 contains a plurality of cells 1, step g (i.e. the repetition of steps a-d) may be carried out on multiple cells 1 simultaneously, or it may be carried out on them individually. For instance, in the latter case, the cell 1 upon which steps a-d are being repeated may be isolated from the device 3 for carrying out EIS, whereas the device 3 continues to be powered by other cells 1. However, a multitude of methodologies are possible.

Although the invention has been described in terms of specific embodiments, variations thereto are possible without departing from the scope of the appended claims.

## Claims

1. Method of estimating an internal temperature of a lithium-ion cell (1), comprising steps of:
a) carrying out an electrochemical impedance spectroscopy measurement on said cell (1) at a known internal temperature so as to determine a phase of impedance at a plurality of electrochemical impedance spectroscopy frequencies;
b) carrying out a distribution of relaxation times analysis on said electrochemical impedance spectroscopy measurement;
c) determining a characteristic frequency corresponding to an electrochemical impedance spectroscopy frequency associated with movement of lithium ions through a solid electrolyte interface layer of said cell, on the basis of said distribution of relaxation times analysis;
d) providing a correlation curve representative of the relationship between the impedance phase at said characteristic frequency and internal temperature for said cell (1), and carrying out a calibration of said correlation curve on the basis of said impedance phase as measured in step a) at said characteristic frequency and said known internal temperature;
e) repeatedly, carrying out electrochemical impedance spectroscopy at said characteristic frequency to determine an impedance phase at said characteristic frequency;
f) on the basis of said impedance phase at said characteristic frequency as determined out in step e), estimating said internal temperature based on said correlation curve as calibrated in step d);
g) repeatedly, updating said characteristic frequency and updating said calibration by repeating steps a)-d).

2. Method according to claim 1, wherein said updating said characteristic frequency is carried out with the battery (1) in service in a system (11).

3. Method according to claim 2, wherein said updating said characteristic frequency is carried out after a determination of a stable temperature, said stable temperature representing a variation in temperature of preferably 0.5°C or less during a period of 15 minutes or more, more preferably of 1 hour or more.

4. Method according to claim 2, wherein said stable temperature is determined by one or both of the estimate of said internal temperature obtained in step f) or from a temperature sensor integrated in said system (11), preferably in proximity to said cell.

5. Method according to any preceding claim, wherein steps e) and f) are repeated at a repeat rate of between 0.5 seconds and 1 hour, preferably between 0.5 seconds and 10 minutes, more preferably between 0.5 seconds and 10 seconds.

6. Method according to the preceding claim, wherein said repeat rate is variable.

7. Method according to any preceding claim, wherein said updating said characteristic frequency is repeated at intervals of between 1 week and 3 months, preferably between 2 weeks and 6 weeks.

8. Method according to any preceding claim, wherein said updating said characteristic frequency is carried out in reaction to a predetermined reduction in state of health of said cell (1).

9. Method according to any preceding claim, wherein said correlation curve is a correlation curve representative of a given type of lithium-ion cells to which said cell (1) belongs to, said correlation curve having a predetermined shape corresponding to said given type of lithium-ion cells and a reference position to be calibrated on a case-by-case basis for each cell belonging to said given type of lithium-ion cells.

10. Method according to the preceding claim, wherein said calibration of said correlation curve is carried out by shifting said correlation curve horizontally and/or vertically.

11. System (11) comprising a cell (1) and a controller (5) arranged to control charging and/or discharging of said cell (1), wherein said controller (5) is adapted to carry out at least some of the steps of the method of any preceding claim.

12. System (11) according to claim 11, wherein said controller (5) is adapted to carry out the entirety of the steps of said method.
